# EUROPÄISCHE PATENTSCHRIFT

(11) **EP 2 161 512 B1**
(45) Veröffentlichungstag und Bekanntmachung des Hinweises auf die Patenterteilung: **21.06.2017**
(21) Anmeldenummer: 09010319.3
(22) Anmeldetag: 11.08.2009
(51) Int. Cl.: F24F 12/00, F24F 13/20

(54) **Dezentrales lufttechnisches Gerät sowie lufttechnische Anlage mit einem derartigen Gerät**
Decentralised ventilation device and ventilation assembly with such a device
Appareil d'aération décentralisé et installation d'aération dotée d'un tel appareil

(30) Priorität: 09.09.2008 DE 102008046361
(43) Veröffentlichungstag der Anmeldung: 10.03.2010
(73) Patentinhaber: LTG Aktiengesellschaft, 70435 Stuttgart (DE)
(72) Erfinder: Wagner, Ralf, 70771 Leinfelden-Echterdingen (DE); Roth, Hans-Werner, Dr., 71732 Tamm (DE)
(74) Vertreter: Grosse, Rainer

(56) Entgegenhaltungen:
- EP-A1- 1 772 679
- EP-A2- 0 044 560
- DE-A1-102005 011 222
- DE-U1-202004 018 206
- FR-A5- 2 078 371

## Beschreibung

Die Erfindung betrifft ein dezentrales lufttechnisches Gerät zur Belüftung und/oder Klimatisierung eines Raumes.

Dezentrale lufttechnische Geräte der vorstehend genannten Art sind bekannt. Sie werden zur Belüftung und/oder Klimatisierung von Räumen eines Gebäudes oder dergleichen verwendet, wobei sie autark arbeiten, also nicht an ein im Gebäude verlegtes Zuluftkanalsystem und/oder Abluftkanalsystem angeschlossen sind, sondern über vorzugsweise kurze Luftkanäle mit der Außenatmosphäre in Verbindung stehen. Im Gegensatz dazu sind zentrale lufttechnische Geräte an eine Klimazentrale des Gebäudes angeschlossen. Die bekannten dezentralen lufttechnischen Geräte weisen eine Zuluftzuführung sowie eine Abluftabführung und einen Wärmetauscher auf, um die in den Raum einzubringende Zuluft wärmetechnisch zu behandeln, also zu kühlen oder zu heizen. Bekannte dezentrale lufttechnische Geräte einer weiteren Bauform weisen zusätzlich eine Umluftführung auf, um Sekundärluft, also Raumluft, dem Raum zu entnehmen, mittels des Wärmetauschers zu behandeln und dann wieder in den selben Raum einzubringen. Ein gattungsgemäßes Gerät ist aus der Druckschrift EP 0 044 560 A2 bekannt. Bei der Konzipierung der lufttechnischen Einrichtung eines Raumes oder Gebäudes ist es daher erforderlich, ein dezentrales lufttechnisches Gerät einzusetzen, dessen Aufbau die individuellen Anforderungen erfüllen kann.

Der Erfindung liegt die Aufgabe zugrunde, ein dezentrales lufttechnisches Gerät zur Belüftung und/oder Klimatisierung eines Raumes zu schaffen, das ohne großen Aufwand individuell an die jeweilige Belüftungs- beziehungsweise Klimatisierungsaufgabe des konkreten Einsatzortes/Raumes erfüllt.

Diese Aufgabe wird durch die Merkmalen von Anspruch 1 gelöst. In Abhängigkeit der Einsatzsituation wird daher stets das dezentrale lufttechnische System/Gerät eingesetzt, dabei jedoch individuell aufgrund des modularen Aufbaus angepasst. Der Geräteaufbau lässt sich durch die Verwendung von mindestens einem der Module oder Zusammenstellung verschiedener Module einsatzspezifisch gestalten. Auch ist eine problemlose Umrüstung und/oder Nachrüstung eines bereits installierten erfindungsgemäßen dezentralen lufttechnischen Geräts möglich, da nur Module ausgetauscht oder herausgenommen beziehungsweise hinzugefügt werden müssen. Das erfindungsgemäße System erfordert nur eine sehr geringe Lagerhaltung, da nur wenige Aufbauteile zur Erfüllung verschiedener Aufgaben bereitgestellt werden müssen, die in wunschgemäßer Kombination zum gesamten dezentralen lufttechnischen Gerät zusammengestellt werden können. Wird nur ein Zuluftteil beim dezentralen lufttechnischen Gerät benötigt, weil die Abluft beispielsweise über eine Raumverbindung zu anderen Räumen des Gebäudes abgeführt wird, so wird diesem dezentralen lufttechnischen Gerät kein Abluftteil zugeordnet. In Abhängigkeit von dem Wunsch, einen Raum durch Umluftführung zu klimatisieren oder mitzuklimatisieren, wird das dezentrale lufttechnische Gerät mit dem Umluftteil ausgestattet oder nicht. Soll eine Wärmerückgewinnung erfolgen, so ist hierfür ebenfalls eine modulartige Baueinheit vorgesehen, die optional zum Einsatz kommen kann.

Nach einer Weiterbildung der Erfindung ist vorgesehen, dass das Wärmerückgewinnungsteil als Zargenmodul oder Raummodul ausgebildet ist. Unter "Zargenmodul" ist eine Baueinheit zu verstehen, die nicht im zu belüftenden oder zu klimatisierenden Raum, sondern in der Raumwand, Fassadenwand oder dergleichen angeordnet ist, also im Raum selber keinen oder so gut wie keinen Raum einnimmt. Ein "Raummodul" ist eine Baueinheit, die im Raum angeordnet ist, also Volumen des Raumes einnimmt. Sämtliche Module beziehungsweise Baueinheiten des dezentralen lufttechnischen Geräts sind nicht über große Entfernungen verteilt angeordnet, sondern stets zusammengefasst, also nah beieinander angeordnet, sodass insgesamt ein Gerät gebildet wird.

Nach einer Weiterbildung der Erfindung ist vorgesehen, dass das Zuluftteil, das Abluftteil und/oder das Umluftteil als Raummodul/e ausgebildet ist/sind. Zuluftteil, Abluftteil und/oder Umluftteil befinden sich demnach innerhalb des zu belüftenden und/oder zu klimatisierenden Raumes. Dem gegenüber ist das Wärmerückgewinnungsmodul vorzugsweise als Zargenmodul ausgebildet, das heißt, es befindet sich in einem Aufnahmeraum einer Raumwand, insbesondere einer Fassadenwand, des Raumes. Der Aufnahmeraum kann einen Luftdurchlass nach außen bilden.

Grundsätzlich ist es möglich, das Zuluftteil, das Abluftteil, das Umluftteil und/oder das Wärmerückgewinnungsteil als Unterflurmodule und/oder Deckenmodule auszubilden. Besonders bevorzugt ist jedoch vorgesehen, dass das Zuluftteil, das Abluftteil, das Umluftteil und/oder das Wärmerückgewinnungsteil als Brüstungsmodul/e ausgebildet ist/sind. Diese Baueinheiten befinden sich daher im Bereich der Brüstung des Raumes, also unterhalb eines Fensters oder dergleichen des Raumes.

Eine Weiterbildung der Erfindung sieht vor, dass Zuluftteil und Abluftteil als seitlich nebeneinander angeordnete Nachbargeräte ausgebildet sind. Die Nachbargeräte bilden zusammen - gegebenenfalls mit weiteren Modulen - das dezentrale lufttechnische Gerät, wobei durch die seitlich benachbart zueinander liegende Anordnung von Zuluftteil und Abluftteil innerhalb des Geräts nebeneinander liegende Zonen geschaffen werden, die der Zuluftführung beziehungsweise der Abluftführung dienen.

Wird ein Wärmerückgewinnungsteil beim dezentralen lufttechnischen Gerät modulartig eingesetzt, so ist vorgesehen, dass zumindest ein Anteil der Rückseite von Zuluftteil und/oder Abluftteil an zumindest einem Bereich einer Innenseite des Wärmerückgewinnungsteils angrenzt. Die Rückseite von Zuluftteil und/oder Abluftteil steht somit dem Bereich der Innenseite des Wärmerückgewinnungsteils gegenüber oder grenzt unmittelbar an diesen an, sodass hier keine Nebeneinander-Bauweise, sondern eine Hintereinander-Bauweise realisiert ist.

Ferner ist es vorteilhaft, wenn die Gesamtbreite von Zuluftteil und Abluftteil so groß wie die Breite des Wärmerückgewinnungsteils ist. In einem solchen Falle bestimmt die Gesamtbreite vorzugsweise die Gerätebreite des dezentralen lufttechnischen Geräts. Um die Module einander besonders einfach zuordnen zu können, ist vorgesehen, dass die Höhen und/oder Tiefen von Zuluftteil und Abluftteil gleich groß ausgebildet sind. Ferner kann vorzugsweise vorgesehen sein, dass die Höhe des Wärmerückgewinnungsteils kleiner als die Höhe(n) von Zuluftteil und/oder Abluftteil ist/sind.

Das Wärmerückgewinnungsteil weist vorzugsweise für die Wärmerückgewinnung einen Luft/Luft-Wärmetauscher auf. Dieser kann bevorzugt als Kreuzwärmetauscher ausgebildet sein. Zusätzlich oder alternativ ist es denkbar, dass das Wärmerückgewinnungsteil eine Wärmeradvorrichtung aufweist. Diese besitzt ein sich langsam drehendes Wärmerad, das durch einen Luftstrom erwärmt oder gekühlt wird, wobei die Wärme oder Kälte von einem anderen Luftstrom genutzt wird, der das Wärmerad durchströmt, sobald es sich bis in die Position dieses anderen Luftstroms gedreht hat.

Bevorzugt ist das erfindungsgemäße dezentrale lufttechnische Gerät durch ein gemeinsames Gehäuse gekennzeichnet, dass für die Aufnahme von mindestens einem der Module geeignet ist. Zusätzlich oder alternativ kann vorgesehen sein, dass die Module eigene Modulgehäuse aufweisen. Mit diesen eigenen Modulgehäusen können die Module in das gemeinsame Gehäuse eingesetzt werden und/oder dass das/die Modulgehäuse ein Gerätegehäuse des dezentralen lufttechnischen Geräts bildet/bilden. Letzteres bedeutet, dass das Modulgehäuse eines Moduls selbst das Gerätegehäuse darstellt, wobei dann, wenn mehrere Module zusammengestellt werden, ihre Modulgehäuse insgesamt gesehen das Gerätegehäuse bilden. In einem solchen Falle werden die Modulgehäuse aneinander befestigt, wodurch das Gerätegehäuse entsteht.

Das dezentrale lufttechnische Gerät kann als Brüstungs-, Decken- und/oder Bodengerät ausgebildet sein. Das Wärmerückgewinnungsteil weist vorzugsweise mindestens einen Bypass auf, sodass bei der Verwendung des Bypasses ein Wärmeaustausch nicht oder nur teilweise erfolgt.

Nach einer Weiterbildung der Erfindung ist vorgesehen, dass das Zuluftteil optional mit einem Sekundärluftteil, insbesondere Raumluftteil, ausrüstbar ist. Bei dieser Ausgestaltung ist demzufolge kein separates Abluftteil erforderlich, sondern in das modulartig aufgebaute Zuluftteil kann ein weiteres Modul, nämlich optional das Sekundärluftteil, eingesetzt werden. Natürlich sind auch lufttechnische Geräte denkbar, die als Baueinheiten sowohl ein Umluftteil als auch ein Zuluftteil aufweisen, wobei letzteres optional mit dem Sekundärluftteil, insbesondere Raumluftteil, ausrüstbar ist.

Ferner ist es vorteilhaft, wenn das Sekundärluftteil eine Sekundärluftklappe und/oder einen Sekundärluftventilator aufweist.

Von Vorteil ist, wenn das Zuluftteil einen Zuluftventilator aufweist.

Ferner ist es vorteilhaft, wenn das Zuluftteil optional mit einem Zuluftwärmetauscher ausrüstbar ist. Auch hier kann demzufolge dem modulartig aufgebauten Zuluftteil optional ein weiteres Modul, nämlich mit Zuluftwärmetauscher, zugeführt werden.

In gleicher Weise ist vorgesehen, dass das Abluftteil optional mit einem Sekundärluftwärmetauscher, insbesondere Raumluftwärmetauscher, ausrüstbar ist. Hierbei handelt es sich ebenfalls um ein optional einsetzbares Modul des als Baueinheit des dezentralen lufttechnischen Geräts ausgebildeten Moduls.

Eine Weiterbildung der Erfindung sieht vor, dass das Abluftteil einen Abluftventilator aufweist. Ferner ist es vorteilhaft, wenn das Abluftteil einen Sekundärluftventilator, insbesondere Raumluftventilator, aufweist.

Bevorzugt ist vorgesehen, dass das Abluftteil ein Sekundärluftfilter, insbesondere Raumluftfilter, oder ein Fortluft-Sekundärluftfilter aufweist.

Die Erfindung betrifft ferner eine lufttechnische Anlage in einem Raum zu dessen Belüftung und/oder Klimatisierung, mit mehreren dezentralen lufttechnischen Geräten nach einem oder mehreren der vorhergehenden Ansprüche, wobei die Geräte mit aus den Modulen gebildetem, unterschiedlichem Modulaufbau ausgestattet sind.

Die lufttechnische Anlage ist vorzugsweise derart ausgebildet, dass der Raum mindestens eine Fensterachse aufweist und dass die Geräte neben und/oder auf der Fensterachse angeordnet sind. Unter "Fensterachse" ist eine imaginäre Achse zu verstehen, die vertikal verläuft und den Raum durch eine Zwischenebene aufteilen kann oder vertikal verlaufend ein Fenster, insbesondere mittig, teilt. Weist ein Raum beispielsweise drei nebeneinander liegende Fenster auf, so besitzt der Raum drei Fensterachsen, nämlich drei Vertikalachsen, die das jeweilige Fenster insbesondere mittig teilen.

Die Zeichnungen veranschaulichen die Erfindung anhand von Ausführungsbeispielen und zwar zeigt:
- Figur 1: eine perspektivische Ansicht auf ein schematisch dargestelltes dezentrales lufttechnisches Gerät in einem schematisch angedeuteten, zu belüftenden und/oder zu klimatisierenden Raum,
- Figur 2: einen Schnitt durch eine Anordnung ähnlich der der Figur 1,
- Figur 3: mehrere Räume eines Gebäudes oder dergleichen mit dezentralen lufttechnischen Geräten,
- Figur 4: ein Modul eines dezentralen lufttechnischen Geräts in Prinzipdarstellung,
- Figur 5: eine Anordnung entsprechend der Figur 4,
- Figur 6: eine Anordnung entsprechend der Figur 4 und
- Figur 7: eine Anordnung entsprechend der Figur 4.

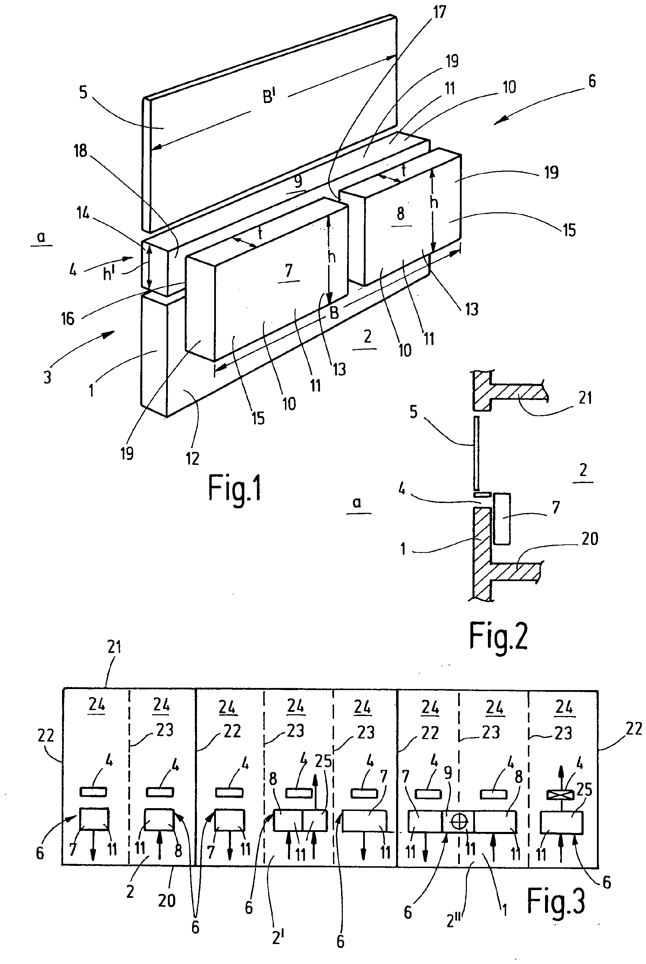

Die Figur 1 zeigt einen Abschnitt einer Brüstungswand 1 eines Raumes 2 eines Gebäudes oder dergleichen. Die Brüstungswand 1, die zur Fassade 3 des Raumes 1 gehört, grenzt an einem vom Inneren des Raums nach außen a führenden Luftdurchlass 4 an. Oberhalb des Luftdurchlasses 4 befindet sich ein Fenster 5 des Raumes 2. Der Luftdurchlass 4 kann beispielsweise als Mauerdurchbruch der Brüstungswand 1 ausgestaltet sein.

Dem Raum 2 ist ein dezentrales lufttechnisches Gerät 6 zugeordnet, das modular aufgebaut ist und einen Geräteaufbau mit einem Zuluftteil 7, einem Abluftteil 8 und einem Wärmerückgewinnungsteil 9 als Baueinheiten 10 aufweist. Die Baueinheiten 10 stellen optional zum Einsatz kommende Module 11 des dezentralen lufttechnischen Geräts 6 dar. Da das Zuluftteil 7 und das Abluftteil 8 innerhalb des Raumes 2, nämlich auf der Innenseite 12 der Brüstungswand 1 angeordnete Module 11 positioniert sind, handelt es sich um Raummodule 13. Dem gegenüber ist das Wärmerückgewinnungsteil 9 in dem als Mauerdurchbruch ausgebildeten Luftdurchlass 4, also nicht innerhalb des Raumes 2, sondern in der Brüstungswand 1 angeordnet, sodass es ein Zargenmodul 14 bildet. Da Zuluftteil 7 und Abluftteil 8 seitlich nebeneinander angeordnet sind, bilden sie Nachbargeräte 15. Ein Anteil der Rückseite 16 des Zuluftteils 7 und ein Anteil der Rückseite 17 des Abluftteils 8 sind einer Innenseite 18 des Wärmerückgewinnungsteils 9 zugeordnet. Die Anordnung ist vorzugsweise derart getroffen, dass die Module 11 jeweils eigene Modulgehäuse 19 aufweisen, die zur Bildung eines Gerätegehäuses des dezentralen lufttechnischen Geräts 6 aneinander befestigt sind. Es ist erkennbar, dass die Höhen h und Tiefen t von Zuluftteil 7 und Abluftteil 8 gleichgroß ausgebildet sind. Die Höhe h' des Wärmerückgewinnungsteils 9 ist kleiner als die Höhe h von Zuluftteil 7 und Abluftteil 8 ausgebildet. Die Gesamtbreite B von Zuluftteil 7 und Abluftteil 8, also die Summe der einzelnen Breiten von Zuluftteil 7 und Abluftteil 8, ist ebenso groß wie die Breite B' des Wärmerückgewinnungsteils 9.

Anhand des Schnittes der Figur 2 ist die Anordnung der Figur 1 nochmals dargestellt, wobei der Luftdurchlass 4 als Durchbruch der Brüstungswand 1 realisiert ist und im Ausführungsbeispiel der Figur 2 nicht mit einem Wärmerückgewinnungsteil 9 bestückt ist. Die Figur 2 zeigt vom Raum 2 ferner einen Abschnitt des Bodens 20 und der Decke 21.

Die Ausgestaltung des modular aufgebauten dezentralen lufttechnischen Geräts 6 gemäß Figur 1 ist derart, dass das Zuluftteil 7 Außenluft über das Wärmerückgewinnungsteil 9 ansaugt und in den Raum 2 einbringt. Im Zuluftteil 7 befindet sich bevorzugt ein Wärmetauscher, um die zugeführte Außenluft (Primärluft) wärmetechnisch behandeln zu können. Das Abluftteil 8 führt Sekundärluft, nämlich Raumluft, über das Wärmerückgewinnungsteil 9 nach außen a, wobei im Winter derart vorgegangen wird, dass mittels des Wärmerückgewinnungsteils 9 die zugeführte Außenluft vom Abluftstrom vorgewärmt wird. Im Sommer ist der Wärmeaustausch umgekehrt, das heißt, die relativ warme Außenluft wird mittels der abgeführten Sekundärluft gekühlt.

Da - wie bereits erwähnt - das dezentrale lufttechnische Gerät 6 modular aufgebaut ist, sind auch Einsatzmöglichkeiten denkbar, bei denen beispielsweise keine Wärmerückgewinnung durchgeführt werden soll, sodass das Wärmerückgewinnungsteil 9 nicht zum Aufbau des dezentralen lufttechnischen Geräts 6 verwendet wird. In einem solchen Falle werden demzufolge lediglich die Module 11 von Zuluftteil 7 und Abluftteil 8 zusammengestellt und im Raum 2 angeordnet.

Die Figur 3 zeigt verschiedene dezentrale lufttechnische Geräte 6 in verschiedenen Räumen 2, 2' und 2" eines Gebäudes oder dergleichen, wobei die Räume 2, 2' und 2" durch Raumwände 22 begrenzt werden und ferner jedem Raum 2, 2', 2" mindestens eine Fensterachse 23 zugeordnet ist. Die Figur 3 zeigt einen Blick auf die innenliegende Fassade der drei Räume 2, 2' 2". Die Fenster dieser Räume 2, 2' und 2" sind nicht eingezeichnet. Die Fensterachsen 23, die jeweils zwischen den jeweiligen Fenstern verlaufen, deuten jedoch an, dass der Raum 2 zwei Fenster, der Raum 2' drei Fenster und der Raum 2" ebenfalls drei Fenster aufweist. Durch die Fensterachsen 23 werden Zonen 24 in den einzelnen Räumen 2, 2' und 2" ausgebildet. Jeder Zone 24 ist mindestens ein dezentrales lufttechnisches Gerät 6 oder ein Modul 11 eines dezentralen lufttechnischen Geräts 6 zugeordnet, wobei es - gemäß Raum 2" - auch sein kann, dass ein dezentrales lufttechnisches Gerät 6 oder ein Modul 11 eines dezentralen lufttechnischen Geräts 6 auf einer Fensterachse 23 liegt.

Im Einzelnen gilt zur Figur 3 folgendes: Jede Zone 24 weist einen Luftdurchlass 4 auf, der vom Inneren des Raumes 2, 2', 2" nach außen a führt. Die Luftdurchlässe 4 sind - der Übersichtlichkeit halber - in der Figur 3 oberhalb der jeweiligen Module 11 der dezentralen lufttechnischen Geräte 6 gezeichnet. Das rechts außen liegende Modul 11 im Raum 2" benötigt den Luftdurchlass 4 nicht, der deshalb durchgestrichen dargestellt ist. Von links nach rechts in Figur 3 betrachtet ist ein dezentrales lufttechnisches Gerät 6 vorgesehen, das nur ein Zuluftteil 7 aufweist. Rechts daneben befindet sich ein Gerät 6, das nur ein Abluftteil 8 besitzt. Im angrenzendem Raum 2' ist ein Gerät 6 vorgesehen, das nur ein Zuluftteil 7 besitzt. Es schließt sich ein Gerät 6 an, das zwei Module 11, nämlich ein Abluftteil 8 und ein Umluftteil 25 aufweist. Die daneben liegende Zone 24 besitzt ein Gerät 6, das nur ein Zuluftteil 7 besitzt. Im angrenzenden Raum 2" ist ein dezentrales lufttechnisches Gerät 6 vorhanden, dass sich über zwei Luftdurchlässe 4 erstreckt, wobei dem einen Luftdurchlass 4 ein Zuluftteil 7 und dem anderen Luftdurchlass 4 ein Abluftteil 8 zugeordnet ist. Zwischen dem Zuluftteil 7 und dem Abluftteil 8 befindet sich ein Wärmerückgewinnungsteil 9. In diesem Falle ist demgemäß - anders als beim Ausführungsbeispiel der Figur 1 - das Wärmerückgewinnungsteil 9 nicht in einem Luftdurchlass 4, sondern auf der Brüstungswand 1 angeordnet. Ferner besitzt der Raum 2" ein weiteres dezentrales lufttechnisches Gerät 6, das ein Umluftteil 25 besitzt. Das Wärmerückgewinnungsteil 9 weist einen Luft/Luft-Wärmetauscher auf, der als Kreuzwärmetauscher oder als Wärmeradvorrichtung ausgebildet sein kann.

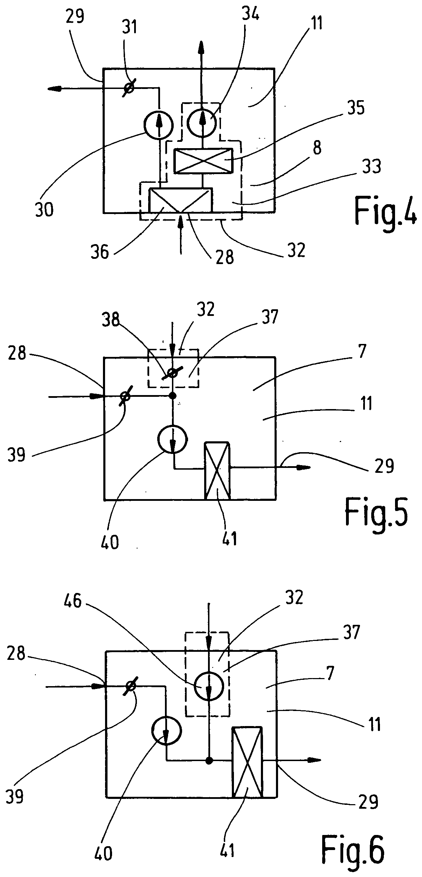

Die Figur 4 zeigt ein Modul 11 für ein dezentrales lufttechnisches Gerät 6, das als Abluftteil 8 ausgebildet ist. Es weist einen Lufteinlass 28 und einen Luftauslass 29 auf, wobei zwischen Lufteinlass 28 und Luftauslass 29 ein Abluftventilator 30 und eine steuerbare Luftklappe 31 liegt. Optional kann dieses Modul 11 mit einem weiteren Modul 32 bestückt werden, das in Figur 4 mit gestrichelter Linie umrandet dargestellt ist. Bei dem Modul 32 handelt es sich um ein Sekundärluftteil 33, das einen Sekundärluftventilator 34, einen Sekundärluftwärmetauscher 35 und - wahlweise - ein gemeinsames Sekundärluftfilter 36 aufweist. "Gemeinsam" ist das Sekundärluftfilter 36 deshalb, weil auch der nach außen zu führende Abluftstrom das Sekundärluftfilter 36 passiert. Sekundärluft, also Raumluft, durchströmt das Sekundärluftfilter 36 und wird nach außen geführt und/oder passiert den Sekundärluftwärmetauscher 35 und wird mittels des Sekundärluftventilators 34 wieder in den Raum 2 nach dem Umluftprinzip eingebracht.

Die Figuren 5 und 6 zeigen jeweils ein Modul 11, das als Zuluftteil 7 ausgebildet ist und optional mit einem Modul 32 bestückt werden kann, das als Sekundärluftteil 37 ausgebildet ist. Das Sekundärluftteil 37 weist bevorzugt eine Sekundärluftklappe 38 oder - gemäß dem Ausführungsbeispiel in Figur 6 - einen Sekundärluftventilator 46 auf. Ferner besitzt das Zuluftteil 7 der Figur 5 einen Lufteinlass 28, an den sich eine Luftklappe 39 anschließt, die sowohl zur Sekundärluftklappe 38 als auch zu einem Zuluftventilator 40 führt, an den sich ein Zuluftwärmetauscher 41 anschließt, der zu einem Luftauslass 29 führt. Die Sekundärluftklappe 38 und/oder der Sekundärluftventilator 34 sind/ist optional. Im Betrieb saugt der Zuluftventilator 40 bei offener Luftklappe 39 Außenluft und bei offener Sekundärluftklappe 38 Raumluft an und fördert diese durch den optionalen Zuluftwärmetauscher 41 und bringt die Luft durch den Luftauslass 29 in den Raum 2 ein. Beim Ausführungsbeispiel der Figur 6 besteht lediglich der Unterschied, dass der Primärluftstrom (Außenluft) über den Zuluftventilator 40 und der Sekundärluftstrom (Raumluft) über den Sekundärluftventilator 46 gesteuert wird.

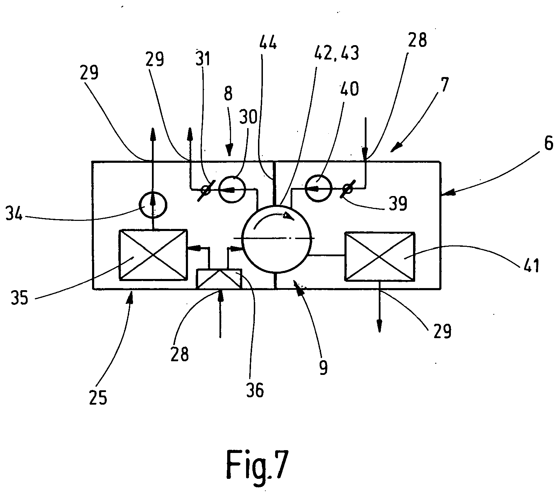

Die Figur 7 zeigt ein dezentrales lufttechnisches Gerät 6 mit einem schematisch dargestellten Abluftteil 8, einem schematisch dargestellten Zuluftteil 7, einem Umluftteil 25 und ein Wärmerückgewinnungsteil 9, das einen Luft/Luft-Wärmetauscher 42 aufweist, der als Wärmeradvorrichtung 43 ausgebildet ist. Das Zuluftteil 7 weist einen Lufteinlass 28 mit sich anschließender Luftklappe 39 und nachfolgendem Zuluftventilator 40 auf, der Luft einem Bereich des sich drehenden Wärmerads der Wärmeradvorrichtung 43 zuführt, die anschließend über einen Zuluftwärmetauscher 41 zu einem Luftauslass 29 geleitet wird und dort in den Raum 2 eintreten kann. Raumluft wird im Bezug auf das Abluftteil 8 einem Lufteinlass 28 zugeführt, dem ein Sekundärluftfilter 36 folgt, der die Luft anteilig einem anderen Bereich des Wärmerads der Wärmeradvorrichtung 43 zuführt. Von dort wird dieser Luftanteil über einen Abluftventilator 30 und eine Luftklappe 31 einem Luftauslass 29 zugeführt, der nach außen führt. Ein anderer Anteil der Sekundärluft wird vom Sekundärluftfilter 36 einem Sekundärluftwärmetauscher 35 zugeführt, dem ein Sekundärluftventilator 34 folgt, dem ein Luftauslass 29 nachgeschaltet ist, der die Luft in den Raum 2 als Umluft einbringt. Die beiden erwähnten Bereiche des Wärmerads der Wärmeradvorrichtung 43 sind durch einen Trennwand 44 voneinander getrennt, sodass mittels des Wärmerads ein Wärmeaustausch, nicht jedoch ein Luftaustausch stattfindet.

Das in der Figur 7 dargestellte dezentrale lufttechnische Gerät 6 weist demzufolge - modulartig zusammengestellt - ein Zuluftteil 7, ein Abluftteil 8, ein Umluftteil 25 und ein Wärmerückgewinnungsteil 9 auf.

## Patentansprüche

1. Dezentrales lufttechnisches Gerät zur Belüftung und/oder Klimatisierung eines Raumes, aufweisend einen modularen Geräteaufbau mit einem Zuluftteil (7), einem Abluftteil (8), einem Umluftteil (25) und einem Wärmerückgewinnungsteil (9) als Baueinheiten (10), **dadurch gekennzeichnet, dass** die Baueinheiten (10) als optional zum Einsatz kommende Module (11) ausgebildet sind, und dass das Wärmerückgewinnungsteil (9) als ein ein Zargenmodul (14) darstellendes Brüstungsmodul ausgebildet ist, und dass das Zuluftteil (7) und das Abluftteil (8) als Raummodule (13) ausgebildet sind.

2. Gerät nach Anspruch 1, **dadurch gekennzeichnet, dass** das Umluftteil (25) als Raummodul (13) ausgebildet ist.

3. Gerät nach Anspruch 1, **dadurch gekennzeichnet, dass** das Umluftteil (25) als Brüstungsmodul ausgebildet ist.

4. Gerät nach einem der vorhergehenden Ansprüche, **dadurch gekennzeichnet, dass** Zuluftteil (7) und Abluftteil (8) als seitlich nebeneinander angeordnete Nachbargeräte (15) ausgebildet sind.

5. Gerät nach einem der vorhergehenden Ansprüche, **dadurch gekennzeichnet, dass** zumindest ein Anteil der Rückseite (16,17) von Zuluftteil (7) und/oder Abluftteil (8) an zumindest einem Bereich einer Innenseite (18) des Wärmerückgewinnungsteils (9) angrenzen.

6. Gerät nach einem der vorhergehenden Ansprüche, **dadurch gekennzeichnet, dass** die Gesamtbreite (B) von Zuluftteil (7) und Abluftteil (8) so groß wie die Breite (B') des Wärmerückgewinnungsteils (9) ist.

7. Gerät nach einem der vorhergehenden Ansprüche, **dadurch gekennzeichnet, dass** die Höhen (h) und/oder Tiefen (t) von Zuluftteil (7) und Abluftteil (8) gleichgroß ausgebildet sind.

8. Gerät nach einem der vorhergehenden Ansprüche, **dadurch gekennzeichnet, dass** die Höhe (h') des Wärmerückgewinnungsteils (9) kleiner als die Höhe(n) (h) von Zuluftteil (7) und/oder Abluftteil (8) ist/sind.

9. Gerät nach einem der vorhergehenden Ansprüche, **dadurch gekennzeichnet, dass** das Wärmerückgewinnungsteil (9) ein Luft/Luft-Wärmetauscher (42) ist.

10. Gerät nach Anspruch 9, **dadurch gekennzeichnet, dass** der Luft/Luft-Wärmetauscher (42) als Kreuzwärmetauscher ausgebildet ist.

11. Gerät nach Anspruch 9 oder 10, **dadurch gekennzeichnet, dass** das Wärmerückgewinnungsteil (9) eine Wärmeradvorrichtung (43) ist.

12. Gerät nach einem der vorhergehenden Ansprüche, **gekennzeichnet durch** ein gemeinsames Gehäuse für die Aufnahme von mindestens einem der Module (11).

13. Gerät nach einem der vorhergehenden Ansprüche, **dadurch gekennzeichnet, dass** die Module (11) eigene Modulgehäuse aufweisen.

14. Gerät nach Anspruch 13, **dadurch gekennzeichnet, dass** das/die Modulgehäuse ein Gerätegehäuse bildet/bilden.

15. Gerät nach einem der vorhergehenden Ansprüche 13 oder 14, **dadurch gekennzeichnet, dass** die Modulgehäuse aneinander befestigt sind.

16. Gerät nach einem der vorhergehenden Ansprüche, **gekennzeichnet durch** die Ausbildung als Brüstungs-, Decken- und/oder Bodengerät.

17. Gerät nach einem der vorhergehenden Ansprüche, **dadurch gekennzeichnet, dass** das Wärmerückgewinnungsteil (9) mindestens einen Bypass besitzt.

18. Gerät nach einem der vorhergehenden Ansprüche, **dadurch gekennzeichnet, dass** das Zuluftteil (7) optional mit einem Sekundärluftteil (37), insbesondere Raumluftteil, ausrüstbar ist.

19. Gerät nach Anspruch 18, **dadurch gekennzeichnet, dass** das Sekundärluftteil (37) eine Sekundärluftklappe (38) und/oder einen Sekundärluftventilator (46) aufweist.

20. Gerät nach einem der vorhergehenden Ansprüche, **dadurch gekennzeichnet, dass** das Zuluftteil (7) einen Zuluftventilator (40) aufweist.

21. Gerät nach einem der vorhergehenden Ansprüche, **dadurch gekennzeichnet, dass** das Zuluftteil (7) optional mit einem Zuluftwärmetauscher (41) ausrüstbar ist.

22. Gerät nach einem der vorhergehenden Ansprüche, **dadurch gekennzeichnet, dass** das Abluftteil (8) optional mit einem Sekundärluftwärmetauscher (35), insbesondere Raumluftwärmetauscher, ausrüstbar ist.

23. Gerät nach einem der vorhergehenden Ansprüche, **dadurch gekennzeichnet, dass** das Abluftteil (8) einen Abluftventilator (30) aufweist.

24. Gerät nach einem der vorhergehenden Ansprüche, **dadurch gekennzeichnet, dass** das Abluftteil (8) einen Sekundärluftventilator, insbesondere Raumluftventilator, aufweist.

25. Gerät nach einem der vorhergehenden Ansprüche, **dadurch gekennzeichnet, dass** das Abluftteil ein Sekundärluftfilter, insbesondere Raumluftfilter, oder ein Fortluft-Sekundärluftfilter (36), aufweist.

26. Lufttechnische Anlage in einem Raum (2) zu dessen Belüftung und/oder Klimatisierung, mit mehreren dezentralen lufttechnischen Geräten (6) nach einem oder mehreren der vorhergehenden Ansprüche, **dadurch gekennzeichnet, dass** die Geräte (6) mit aus den Modulen (11) gebildetem, unterschiedlichem Modulaufbau ausgestattet sind.

27. Lufttechnische Anlage nach Anspruch 26, **dadurch gekennzeichnet, dass** der Raum (2) mindestens eine Fensterachse (23) aufweist und dass die Geräte (6) neben und/oder auf der Fensterachse (23) angeordnet sind.

## Claims

1. A decentralized air related device for ventilation and/or air conditioning of a room, with a modular device configuration comprising a supply air part (7), an exhaust air part (8), a circulating air part (25) and a heat recovery part (9) as structural units (10), **characterised in that** the structural units (10) are embodied as optionally used modules (11) and that the heat recovery part (9) is embodied as a parapet module, which represents a frame module (14) and that the supply air part (7) and the exhaust air part (8) are embodied as room modules (13).

2. The device according to claim 1, **characterised in that** the circulating air part (25) is embodied as room module (13).

3. The device according to claim 1, **characterised in that** the circulating air part (25) is embodied as parapet module.

4. The device according to any one of the preceding claims, **characterised in that** supply air part (7) and exhaust air part (8) are embodied as neighbouring devices (15), which are arranged laterally next to one another.

5. The device according to any one of the preceding claims, **characterised in that** at least a portion of the rear side (16, 17) of supply air part (7) and/or exhaust air part (8) adjoin on at least an area of an inner side (18) of the heat recovery part (9).

6. The device according to any one of the preceding claims, **characterised in that** the total width (B) of supply air part (7) and exhaust air part (8) is as large as the width (B') of the heat recovery part (9).

7. The device according to any one of the preceding claims, **characterised in that** the heights (h) and/or depths (t) of supply air part (7) and exhaust air part (8) are embodied to have the same size.

8. The device according to any one of the preceding claims, **characterised in that** the height (h') of the heat recovery part (9) is/are smaller than the height(s) (h) of supply air part (7) and/or exhaust air part (8).

9. The device according to any one of the preceding claims, **characterised in that** the heat recovery part (9) is an air-to-air heat exchanger (42).

10. The device according to claim 9, **characterised in that** the air-to-air heat exchanger (42) is embodied as cross-flow heat exchanger.

11. The device according to claim 9 or 10, **characterised in that** the heat recovery part (9) is a rotary heat exchanger (43).

12. The device according to any one of the preceding claims, **characterised by** a common housing for accommodating at least one of the modules (11).

13. The device according to any one of the preceding claims, **characterised in that** the modules (11) have their own module housings.

14. The device according to claim 13, **characterised in that** the module housing(s) forms/form a device housing.

15. The device according to any one of the preceding claims 13 or 14, **characterised in that** the module housings are fastened to one another.

16. The device according to any one of the preceding claims, **characterised by** the formation as parapet, ceiling and/or floor device.

17. The device according to any one of the preceding claims, **characterised in that** the heat recovery part (9) has at least one bypass.

18. The device according to any one of the preceding claims, **characterised in that** the supply air part (7) can optionally be equipped with a secondary air part (37), in particular room air part.

19. The device according to claim 18, **characterised in that** the secondary air part (37) has a secondary air flap (38) and/or a secondary air ventilator (46).

20. The device according to any one of the preceding claims, **characterised in that** the supply air part (7) has a supply air ventilator (40).

21. The device according to any one of the preceding claims, **characterised in that** the supply air part (7) can optionally be equipped with a supply air heat exchanger (41).

22. The device according to any one of the preceding claims, **characterised in that** the exhaust air part (8) can optionally be equipped with a secondary air heat exchanger (35), in particular room air heat exchanger.

23. The device according to any one of the preceding claims, **characterised in that** the exhaust air part (8) has an exhaust air ventilator (30).

24. The device according to any one of the preceding claims, **characterised in that** the exhaust air part (8) has a secondary air ventilator, in particular room air ventilator.

25. The device according to any one of the preceding claims, **characterised in that** the exhaust air part has a secondary air filter, in particular room air filter, or an outgoing air secondary air filter (36).

26. An air related assembly in a room (2) for the ventilation and/or air conditioning thereof, comprising a plurality of decentralized ventilation devices (6) according to any one or a plurality of the preceding claims, **characterised in that** the devices (6) are equipped with different modular design formed from the modules (11).

27. The air related system according to claim 26, **characterised in that** the room (2) has at least one window axis (23) and that the devices (6) are arranged next to and/or on the window axis (23).

## Revendications

1. Appareil de conditionnement d'air décentralisé pour aérer et/ou climatiser un local, présentant une structure d'appareil modulaire avec une partie d'amenée d'air (7), une partie de sortie d'air (8), une partie de circulation d'air (25) et une partie de récupération de chaleur (9) en tant qu'unités de construction (10), **caractérisé en ce que** les unités de construction (10) sont conçues en tant que modules (11) utilisés en option et que la partie de récupération de chaleur (9) est conçue en tant que module de parapet représentant un module de dormant (14) et que la partie d'amenée d'air (7) et la partie de sortie d'air (8) sont conçues en tant que modules de locaux (13).

2. Appareil selon la revendication 1, **caractérisé en ce que** la partie de circulation d'air (25) est conçue en tant que module de locaux (13).

3. Appareil selon la revendication 1, **caractérisé en ce que** la partie de circulation d'air (25) est conçue en tant que module de parapet.

4. Appareil selon l'une des revendications précédentes, **caractérisé en ce que** la partie d'amenée d'air (7) et la partie de sortie d'air (8) sont conçues comme des appareils voisins (15) disposés latéralement l'un à côté de l'autre.

5. Appareil selon l'une des revendications précédentes, **caractérisé en ce qu'**au moins une partie de la face arrière (16, 17) de la partie d'amenée d'air (7) et/ou de la partie de sortie d'air (8) est/sont délimitée(s) sur au moins une zone d'une face intérieure (18) de la partie de récupération de chaleur (9).

6. Appareil selon l'une des revendications précédentes, **caractérisé en ce que** la largeur totale (B) de la partie d'amenée d'air (7) et de la partie de sortie d'air (8) est aussi grande que la largeur (B') de la partie de récupération de chaleur (9).

7. Appareil selon l'une des revendications précédentes, **caractérisé en ce que** les hauteurs (h) et/ou les profondeurs (t) de la partie d'amenée d'air (7) et de la partie de sortie d'air (8) sont conçues de grandeur égale.

8. Appareil selon l'une des revendications précédentes, **caractérisé en ce que** la hauteur (h') de la partie de récupération de chaleur (9) est inférieure à la/les hauteur(s) (h) de la partie d'amenée d'air (7) et de la partie de sortie d'air (8).

9. Appareil selon l'une des revendications précédentes, **caractérisé en ce que** la partie de récupération de chaleur (9) est un échangeur de chaleur air/air (42).

10. Appareil selon la revendication 9, **caractérisé en ce que** l'échangeur de chaleur air/air (42) est conçu en tant qu'échangeur de chaleur croisé.

11. Appareil selon la revendication 9 ou 10, **caractérisé en ce que** la partie de récupération de chaleur (9) est un dispositif à roue thermique (43).

12. Appareil selon l'une des revendications précédentes, **caractérisé par** un carter commun pour recevoir au moins un des modules (11).

13. Appareil selon l'une des revendications précédentes, **caractérisé en ce que** les modules (11) présentent leurs propres carters de module.

14. Appareil selon la revendication 13, **caractérisé en ce que** le(s) carter(s) de module forme(nt) un carter d'appareil.

15. Appareil selon l'une des revendications précédentes 13 ou 14, **caractérisé en ce que** les carters de module sont fixés les uns aux autres.

16. Appareil selon l'une des revendications précédentes, **caractérisé par** la conception en tant qu'appareil de parapet, au plafond et/ou au sol.

17. Appareil selon l'une des revendications précédentes, **caractérisé en ce que** la partie de récupération de chaleur (9) possède au moins une dérivation.

18. Appareil selon l'une des revendications précédentes, **caractérisé en ce que** la partie d'amenée d'air (7) peut être équipée en option d'une partie d'air secondaire (37), en particulier d'une partie d'air ambiant.

19. Appareil selon la revendication 18, **caractérisé en ce que** la partie d'air secondaire (37) présente un clapet d'air secondaire (38) et/ou un ventilateur d'air secondaire (46).

20. Appareil selon l'une des revendications précédentes, **caractérisé en ce que** la partie d'amenée d'air (7) présente un ventilateur d'amenée d'air (40).

21. Appareil selon l'une des revendications précédentes, **caractérisé en ce que** la partie d'amenée d'air (7) peut être équipée en option d'un échangeur de chaleur d'air amené (41).

22. Appareil selon l'une des revendications précédentes, **caractérisé en ce que** la partie de sortie d'air (8) peut être équipée en option d'un échangeur de chaleur d'air secondaire (35), en particulier d'un échangeur de chaleur d'air ambiant.

23. Appareil selon l'une des revendications précédentes, **caractérisé en ce que** la partie de sortie d'air (8) présente un ventilateur de sortie d'air (30).

24. Appareil selon l'une des revendications précédentes, **caractérisé en ce que** la partie de sortie d'air (8) présente un ventilateur d'air secondaire, en particulier un ventilateur d'air ambiant.

25. Appareil selon l'une des revendications précédentes, **caractérisé en ce que** la partie de sortie d'air présente un filtre à air secondaire, en particulier un filtre à air ambiant ou un filtre à air secondaire d'air d'échappement (36).

26. Installation de conditionnement d'air dans un local (2) pour son aération et/ou sa climatisation, comprenant une pluralité d'appareils (6) de conditionnement d'air décentralisés selon l'une ou plusieurs des revendications précédentes, **caractérisée en ce que** les appareils (6) sont équipés d'une structure de modules divers formé de modules (11).

27. Installation de conditionnement d'air selon la revendication 26, **caractérisée en ce que** le local (2) présente au moins un axe de fenêtres (23) et que les appareils (6) sont disposés à côté de et/ou sur l'axe de fenêtres (23).
